# EUROPÄISCHE PATENTSCHRIFT

(11) **EP 2 298 600 B1**
(45) Veröffentlichungstag und Bekanntmachung des Hinweises auf die Patenterteilung: **23.10.2013**
(21) Anmeldenummer: 10191307.7
(22) Anmeldetag: 07.06.2007
(51) Int. Cl.: B60Q 1/04, B60Q 1/00, B62D 25/08, B62D 65/16

(54) **Frontendmodul für Fahrzeuge**
Front end module for vehicle
Bloc avant pour véhicule

(30) Priorität: 19.02.2007 DE 102007008489
(43) Veröffentlichungstag der Anmeldung: 23.03.2011
(62) Teilanmeldung aus: 07764351.8
(73) Patentinhaber: HBPO GmbH, 59552 Lippstadt (DE)
(72) Erfinder: Opperbeck, Guido, 59558 Lippstadt (DE); Schöning, Ralf, 33442 Herzebrock-Clarholz (DE); Schlüter, Sascha, 89346 Bühl-Bibertal (DE); Schäfergockel, Frank, 33106 Paderborn (DE)
(74) Vertreter: Ostermann, Thomas

(56) Entgegenhaltungen:
- EP-A1- 1 502 841
- EP-A1- 1 544 032
- DE-A1-102005 057 116
- DE-B3- 10 237 454
- DE-B3-102005 013 107
- DE-C1- 10 010 709

## Beschreibung

Die Erfindung betrifft ein Frontendmodul für Fahrzeuge mit einem Montageträger nach dem Oberbegriff des Patentanspruchs 1.

Aus der DE 10 2005 013 107 B3 ist ein Frontendmodul für Fahrzeuge mit einem Montageträger bekannt, der eine Mehrzahl von Streben aufweist, so dass Bauteile einer Motorkühlungsgruppe oder einer Klimaanlage oder ein Scheinwerfer aufgenommen werden kann. Zur Aufnahme des Scheinwerfers ist eine Halteeinrichtung vorgesehen, die einen starren Haltearm aufweist, auf dem der Scheinwerfer aufliegt. Ferner weist die Halteeinrichtung ein sich an den Haltearm anschließenden elastischen Abschnitt auf, der an einer Strebe des Montageträgers befestigt ist. Der elastische Abschnitt der Halteeinrichtung dient zum Toleranzausgleich bei der Montage des Frontendmoduls an einem Strukturbauteil der Fahrzeugkarosserie. Durch Schließen einer Frontklappe des Fahrzeugs wirkt eine Deformationskraft in vertikaler Richtung auf den elastischen Abschnitt der Halteeinrichtung, so dass eine Anpassung des Haltearmes bzw. des Scheinwerfers an den Fugenverlauf der Frontklappe ermöglicht wird. Durch anschließendes Fixieren des elastischen Abschnittes an einer Strebe des Montageträgers kann die Position des Scheinwerfers aufrechterhalten werden, auch wenn der Motorraum des Fahrzeugs durch Betätigen der Frontklappe wieder geöffnet wird.

Nachteilig an dem bekannten Frontendmodul ist, dass der Fugenverlauf des Scheinwerfers allein durch die Konturierung der Frontklappe vorgegeben ist.

Die Einstellung eines bestimmten Fugenspaltes unabhängig von der Konturierung der Frontklappe ist nicht möglich.

Aus der EP 1 502 841 A1 ist ein Frontendmodul für Fahrzeuge mit einem Montageträger bekannt, der mehrere Streben zur Aufnahme von Bauteilen sowie einen Haltearm zur Aufnahme eines Scheinwerfers aufweist. Zur Ausrichtung des Scheinwerfers in der Endmontageposition ist ein Einstellelement vorgesehen, das auf den Scheinwerfer tragenden Haltearm einwirkt.

Aufgabe der vorliegenden Erfindung ist es daher, ein Frontendmodul für Fahrzeuge derart weiterzubilden, dass der Montageaufwand für ein mit einem Scheinwerfer bestücktes Frontendmodul verringert wird, wobei eine vorgegebene Fugenausbildung gegenüber angrenzenden Karosserieteilen, insbesondere eines angrenzenden Seitenteils, gewährleistet ist.

Zur Lösung dieser Aufgabe weist die Erfindung die Merkmale des Patentanspruchs 1 auf.

Der besondere Vorteil des erfindungsgemäßen Frontendmoduls besteht darin, dass eine Einstellbarkeit des Scheinwerfers in einer vorgegebenen Verstellrichtung entlang eines variablen Verstellwegs ermöglicht wird zur Bildung eines vorgegebenen Fugenverlaufes in Bezug zu angrenzenden Karosserieteilen, insbesondere eines Seitenteils (Kotflügel) des Fahrzeugs. Das erfindungsgemäße Einstellelement kann mittels eines Werkzeuges einfach von einem Monteur betätigt werden.

Nach der Erfindung ist das Einstellelement als ein Exzenterelement ausgebildet, wobei das Exzenterelement eine kreisförmige Mitnahmefläche mit einem Mittelpunkt aufweist, der in einem Abstand zu der Drehachse des Exzenterelementes angeordnet ist. Die Mitnahmefläche kann glatt oder verzahnt ausgebildet sein, so dass ein kontinuierliches bzw. stufenförmiges Verstellen des Scheinwerfers bzw. der Halteplatte in Verstellrichtung ermöglicht wird. Durch die verzahnte Ausbildung der Mitnahmefläche kann der Scheinwerfer in definierten Verstellschritten in die endgültige Verstellposition verschoben werden.

Nach der Erfindung schließt sich an die Halteplatte ein elastischer Abschnitt an, der zumindest in Verstellrichtung nachgiebig ausgebildet ist. Durch Beaufschlagung des Anschlagelementes bzw. der Halteplatte mittels der Mitnahmefläche des Einstellelementes wird der elastische Abschnitt der Halteeinrichtung in Verstellrichtung gestreckt oder gestaucht, so dass der Haltearm eine gewünschte Verstellposition entlang der Verstellrichtung einnehmen kann.

Nach der Erfindung weist das Einstellelement eine Mitnahmefläche auf, die durch Verdrehung derselben nach und nach oder stufig auf ein Anschlagelement des Haltearmes einwirkt, das zusammen mit dem Haltearm in Verstellrichtung in Abhängigkeit von der Drehlage der Mitnahmefläche bewegt wird. Vorteilhaft kann durch Ansetzen eines Drehwerkzeugs an dem Einstellelement der Monteur einen vorgegebenen Fugenverlauf in Bezug zu angrenzenden Karosserieteilen, insbesondere eines Seitenteils (Kotflügel) einstellen.

Nach einer bevorzugten Ausführungsform der Erfindung ist das Einstellelement drehbar um eine senkrecht zur Verstellrichtung angeordnete Drehachse im Bereich eines der Fahrzeugslängsmittelachse zugewandten Endes des Haltearmes gelagert. Vorteilhaft kann die Montage des Scheinwerfers vereinfacht werden, da zur Einstellung des Scheinwerfers in Verstellrichtung nur das drehbare Einstellelement betätigt werden muss. Eine Festlegung der endgültigen Verstellposition des Scheinwerfers kann dann durch ein weiteres Befestigungsmittel erfolgen. Ansonsten erforderliche Hohlschrauben zur Ausrichtung und Festlegung des Scheinwerfers sind nicht notwendig. Die Montage des Scheinwerfers kann daher kostengünstig und schnell erfolgen.

Nach einer Weiterbildung der Erfindung weist der elastische Abschnitt der Halteeinrichtung mindestens zwei elastische Schenkel auf, die sich an einem Ende der Halteplatte unter Verbreiterung derselben in Richtung einer Verbindungsplatte oder einer Halterplatte erstrecken. Vorzugsweise bilden die elastischen Schenkel eine Bogenform, so dass ein Stauchen oder Strecken der Schenkel in eine Hin- und Herbewegung entlang der Verstellrichtung umgesetzt werden kann.

Nach einer bevorzugten Ausführungsform der Erfindung erfolgt die Befestigung der Halteplatte an einem Seitenteil der Fahrzeugkarosserie mittels eines Befestigungselementes, das in ein Langloch eingreift, dessen Hauptachse in Verstellrichtung verläuft. Vorzugsweise ist das Langloch an dem freien Ende der Halteplatte angeordnet, so dass bei angesetztem Befestigungselement eine definierte Führung der Halteplatte in Verstellrichtung gegeben ist. Sobald die gewünschte Verstellposition des Scheinwerfers erreicht ist, kann durch Festziehen des Befestigungselementes die Position des Scheinwerfers in Verstellrichtung fixiert werden.

Weitere Vorteile der Erfindung ergeben sich aus den weiteren Unteransprüchen.

Ausführungsbeispiele der Erfindung werden nachfolgend anhand der Zeichnungen 16-20 näher erläutert.

Es zeigen:
- Figur 1: eine perspektivische Vorderansicht eines endseitigen Aufnahmebereichs eines Frontendmoduls für eine Leuchteinheit im nichtmontierten Zustand der Leuchteinheit,

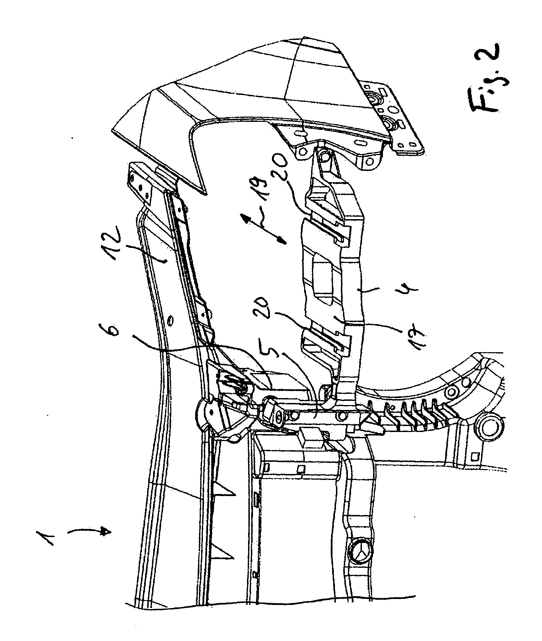

- Figur 2: eine perspektivische Vorderansicht des endseitigen Aufnahmebereichs des Frontendmoduls gemäß Figur 1 mit einem Trägerteil ohne Darstellung der Leuchteinheit, wobei auf einer der Fahrzeugmittelebene abgewandten Seite des Aufnahmebereichs ein Seitenteil an einem Haltearm des Trägerteils montiert ist,

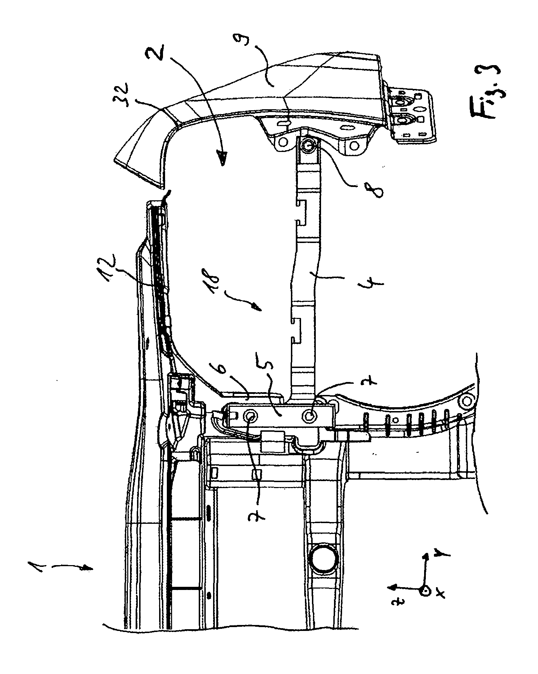

- Figur 3: eine Vorderansicht des endseitigen Aufnahmebereichs des Frontendmoduls ohne Darstellung der Leuchteinheit,
- Figur 4: eine perspektivische Vorderansicht eines mit dem Trägerteil des Frontendmoduls verbindbaren Haltearms enthaltend Führungsmittel zur geführten Verschiebung der Leuchteinheit in X-Richtung,
- Figur 5: eine Vorderansicht der Leuchteinheit,
- Figur 6: einen vertikalen Querschnitt durch das Trägerteil im Bereich der Aufnahme für die Leuchteinheit, die sich in der Betriebsstellung befindet, mit einem Haltearm nach einer alternativen Ausführungsform,
- Figur 7: eine perspektivische Teilansicht eines Frontendmoduls im Aufnahmebereich der Leuchteinheit von schräg oben mit einer Leuchteinheit in einer Betriebsstellung, wobei die Leuchteinheit an dem Trägerteil über eine Halteinrichtung nach einer zweiten Ausführungsform befestigt ist,
- Figur 8: eine perspektivische Ansicht des Aufnahmebereichs gemäß Figur 7 in einer Reparaturstellung der Leuchteinheit,
- Figur 9: eine perspektivische Teilansicht eines Frontendmoduls im Aufnahmebereich der Leuchteinheit von schräg oben mit einer Leuchteinheit in einer Betriebsstellung, wobei die Leuchteinheit an dem Trägerteil über eine Halteinrichtung nach einer dritten Ausführungsform befestigt ist,
- Figur 10: eine perspektivische Ansicht des Aufnahmebereichs gemäß Figur 9 in einer Reparaturstellung der Leuchteinheit,
- Figur 11: eine perspektivische Teilansicht eines Frontendmoduls im Aufnahmebereich der Leuchteinheit von schräg oben mit einer Leuchteinheit in einer Betriebsstellung, wobei die Leuchteinheit an dem Trägerteil über eine Halteinrichtung nach einer vierten Ausführungsform befestigt ist,
- Figur 12: eine perspektivische Ansicht des Aufnahmebereichs gemäß Figur 11 in einer Reparaturstellung der Leuchteinheit,
- Figur 13: eine perspektivische Teilansicht eines Frontendmoduls im Aufnahmebereich der Leuchteinheit von schräg oben mit einer Leuchteinheit in einer Betriebsstellung, wobei die Leuchteinheit an dem Trägerteil über eine Halteinrichtung nach einer fünften Ausführungsform befestigt ist,
- Figur 14: eine perspektivische Ansicht des Aufnahmebereichs gemäß Figur 13 in einer Reparaturstellung der Leuchteinheit,
- Figur 15: eine vergrößerte perspektivische Rückansicht der Leuchteinheit von schräg oben mit einem schwalbenschwanzförmigen zweiten Maschenelement,
- Figur 16: eine Vorderansicht eines Teils eines erfindungsgemäß Frontendmoduls mit einem Scheinwerfer, der in einer Querrichtung ausgerichtet zu einem Seitenteil der Fahrzeugkarosserie angeordnet ist,
- Figur 17: eine Vorderansicht einer Halteeinrichtung für den Scheinwerfer,
- Figur 18: eine vergrößerte Darstellung eines elastischen Abschnitts der Halteeinrichtung, in dem ein Einstellelement zur Verstellung des Scheinwerfers in Verstellrichtung angeordnet ist,
- Figur 19: eine perspektivische Seitenansicht des Einstellelementes und
- Figur 20: eine Draufsicht auf das Einstellelement.

Ein Frontendmodul erstreckt sich im Wesentlichen über die gesamte Breite eines Kraftfahrzeugs und wird in einem vorderen Bereich des Fahrzeugs an einem Fahrgestell montiert. Das Frontendmodul weist ein langgestrecktes Trägerteil 1 auf, das neben der Aufnahme eines Kühlaggregats und eines Stoßfängers an gegenüberliegenden Endbereichen Aufnahmen 2 zur Montage von Leuchteinheiten 3 aufweist.

Die Leuchteinheit 3, die vorzugsweise als Scheinwerfer ausgebildet ist und ein Gehäuse aufweist, ist über eine Halteeinrichtung an dem Trägerteil 1 befestigt.

Die Halteeinrichtung umfasst einen Haltearm 4, der auf einer der Fahrzeuglängsmittelachse zugewandten Seite über einen Haltesteg 5 mit einer Querstrebe 6 des Trägerteils 1 mittels Schraubverbindung verbunden ist. Zu diesem Zweck weist der Haltesteg 5 zwei Bohrungen auf, durch die jeweils eine Schraube 7 als Befestigungsmittel parallel zur Fahrtrichtung bzw. in X-Richtung einsetzbar und den Haltesteg 5 kraftschlüssig mit dem Trägerteil 1 verbindbar ist.

Auf einer der Fahrzeuglängsmittelachse abgewandten Seite des Haltearms 4, also an einem stirnseitigen Ende des Trägerteils 1, ist der Haltearm 4 über eine Schraube 8 als Befestigungsmittel mit einem Seitenteil 9 (Kotflügel) des Fahrzeugs verbunden. Alternativ kann das freie Ende des Haltearms 4 auch über eine Spreitzniet mit dem Seitenteil 9 verbunden sein.

Die Leuchteinheit 2 weist in einem oberen Randbereich 10 zwei in einem Abstand zueinander angeordnete Laschen 11 auf, mittels derer die Leuchteinheit 3 an einer Längsstrebe 12 des Trägerteils 1 befestigbar ist. Zu diesem Zweck weisen die Laschen 11 jeweils zu korrespondierenden Bohrungen der Längsstrebe 12 in der Betriebsstellung fluchtende Bohrungen 13 auf, durch die jeweils Schrauben als Befestigungsmittel eingreifen können. Die Laschen 11 erstrecken sich vorzugsweise horizontal, so dass die Befestigungsschrauben in Z-Richtung in die Laschen 11 eingreifen und diese kraftschlüssig mit der Längsstrebe 12 verbinden. Die Laschen 11, die Bohrungen der Längsstrebe 12 und die Schrauben sind Bestandteil der Halteeinrichtung.

Auf einer der Fahrzeugmittelachse zugewandten Seite ragt von der Leuchteinheit 3 in einem mittleren Bereich eine Innenlasche 14 ab mit einer Bohrung, so dass die Leuchteinheit 3 mittels einer Hohlschraube 15 an einer oberen Stirnseite 16 des Haltestegs 5 befestigbar ist.

Der Haltearm 4 weist eine ebene Haltefläche 17 auf, in der parallel zueinander in einem Abstand verlaufende Führungsmittel 18 integriert sind zur Führung der Leuchteinheit 3 entlang einer geradlinigen Verstellrichtung 19 aus einer Betriebsstellung der Leuchteinheit 3, in der dieselbe über die Laschen 11 bzw. 14 an dem Trägerteil 1 bzw. dem Haltearm 4 befestigt ist, in eine in Verstellrichtung 19 vor dem Trägerteil 1 liegende Reparaturstellung und umgekehrt. In der Reparaturstellung ist im rückseitigen Bereich der Leuchteinheit 3 genügend Raum geschaffen, um beispielsweise einen Leuchtmittelwechsel an der Leuchteinheit 3 vornehmen zu können.

Damit die Leuchteinheit 3 in Verstellrichtung 19 bzw. in X-Richtung verschiebbar geführt ist, weist der Haltearm 4 zwei parallele Schienen 20 auf, die jeweils als eine im Querschnitt C-förmige oder T-förmige Nut ausgebildet sind. An einem unteren Randbereich 21 der Leuchteinheit 3 ragen beabstandet und korrespondierend zu den jeweiligen Schienen 20 zwei Schlittenelemente 22 ab, die jeweils einen T-förmigen Querschnitt aufweisen, so dass die Leuchteinheit 3 nach Einschieben der Schlitten elemente 22 entlang der X-Richtung in die Schienen 20 sowohl in Y-Richtung als auch in Z-Richtung festgelegt ist.

Die Länge der Schienen 20 gibt den maximalen Verstellweg S zwischen der Betriebsstellung und der Reparaturstellung der Leuchteinheit 3 vor.

Das Schlittenelement 22 befindet sich vorzugsweise in einem hinteren Bereich einer Unterseite 23 der Leuchteinheit 3, so dass sich das Schlittenelement 22 in der Betriebsstellung der Leuchteinheit 3 an einem hinteren Ende 24 der Schiene 20 und in der Reparaturstellung der Leuchteinheit 3 an einem vorderen Ende 25 der Schiene 20 befindet.

Die Reparaturstellung der Leuchteinheit 3 wird dadurch definiert, dass eine untere Kante der Leuchteinheit 3 an einer nicht dargestellten Stoßfängerfixierung anschlägt.

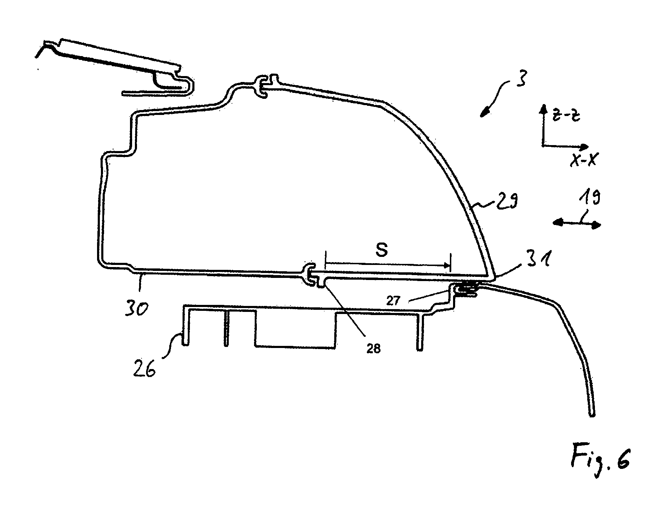

Nach einer alternativen Ausführungsform eines Haltearms 26 gemäß Figur 6 kann dieser in einem vorderen Bereich einen in Z-Richtung nach oben weisenden Anschlag 27 aufweisen, gegen den ein in vertikaler Richtung nach unten abragender Ansatz 28 der Leuchteinheit 3 in der Reparaturstellung anschlägt. Beispielsweise kann der Ansatz 28 der Leuchteinheit 3 durch einen in Verstellrichtung 19 nach hinten versetzten Absatz einer Abschlussscheibe 29 gebildet sein, der zur Befestigung der Abschlussscheibe 29 an einem Gehäuse 30 der Leuchteinheit 3 dient. Der maximale Verstellweg S ist abhängig von dem Abstand des Ansatzes 28 zu einer vorderen Kante 31 der Abschlussscheibe 29. Der maximale Verstellweg S wird festgelegt durch den Abstand des Ansatzes 28 der Leuchteinheit 3 zu dem Anschlag 27 des Haltearms 26 in der Betriebsstellung der Leuchteinheit 3.

Der Haltearm 4 ist vorzugsweise aus einem nachgiebigen Material ausgebildet, so dass ein Ausgleich von Fertigungstoleranzen zwischen der Leuchteinheit 3 und Karosserieteilen, wie dem Seitenteil 9 sowie eines nicht dargestellten Stoßfängers, erzielt werden können. Beispielsweise kann der Haltearm 4 so befestigt werden, dass ein vorgegebener Fugenverlauf 32 zwischen der Leuchteinheit 3 und dem Seitenteil 9 eingestellt wird.

Damit das Lösen der Leuchteinheit 3 von dem Trägerteil 1 bzw. dem Haltesteg 5 erleichtert wird, können die Befestigungsmittel an den Laschen 11 bzw. an der Innenlasche 14 als werkzeugfreie Befestigungsschrauben ausgebildet sein, die ohne Zuhilfenahme von Werkzeug betätigbar sind.

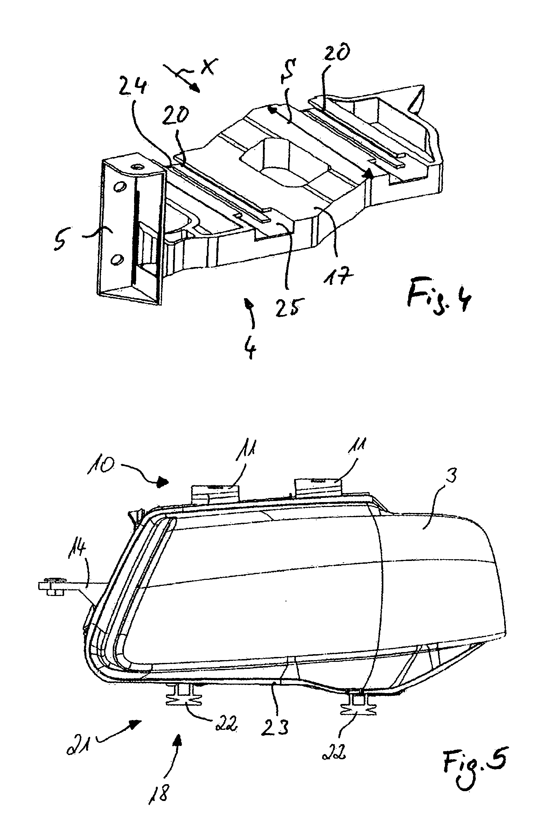

Wie insbesondere aus Figur 4 ersichtlich ist, ist der Haltearm 4 L-förmig ausgebildet. Der Haltearm 4 erstreckt sich senkrecht zu der Haltefläche 17 des Haltearms 4.

Vorzugsweise ist der Haltearm 4 in einem Eckbereich desselben nachgiebig ausgebildet, so dass ein Ausgleich von Fertigungstoleranzen in X- und Y-Richtung sowie gegebenenfalls in Z-Richtung bei Anbindung des Haltearms 4 an das Seitenteil 9 bzw. die Leuchteinheit 3 gegeben ist.

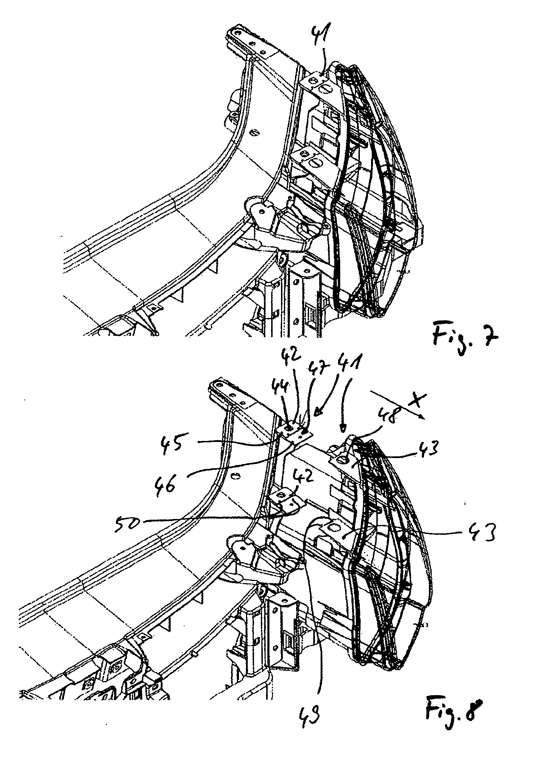

Nach einer alternativen Ausführungsform der Halteeinrichtung gemäß den Figuren 7 und 8 ist eine Lasche 41 der Leuchteinheit 3 segmentiert ausgebildet und weist ein erstes Laschenelement 42 und ein zweites Laschenelement 43 auf.

Das erste Laschenelement 42 dient vorzugsweise zur Ausrichtung der Leuchteinheit 3 in Bezug auf Karosserieteile, so dass ein vorgegebener Fugenverlauf gegeben ist.

Das zweite Laschenelement 43 ermöglicht vorzugsweise eine lagerichtige Anbindung der Leuchteinheit 3, wenn diese von der Reparaturstellung wieder in die Betriebsstellung verbracht wird.

Gleiche Bauteile bzw. Bauteilfunktionen der beschriebenen Ausführungsbeispiele sind mit den gleichen Bezugsziffern versehen.

Das erste Laschenelement 42 ist plattenförmig ausgebildet und weist eine erste Bohrung 44 auf, so dass es über ein nicht dargestelltes Befestigungsmittel an der Querstrebe 6 befestigbar ist. Das erste Laschenelement 42 weist einen in X-Richtung verlaufenden an einem die erste Bohrung 44 aufnehmenden ersten Abschnitt 45 anschließenden zweiten Abschnitt 46 auf, der eine zweite Bohrung 47 des ersten Laschenelementes 42 aufweist. Die zweite Bohrung 47 des zweiten Abschnitts 46 dient zur lösbaren Verbindung des ersten Laschenelementes 42 mit dem zweiten Laschenelement 43 in der Betriebsstellung der Leuchteinheit 3.

Das zweite Laschenelement 43 ist plattenförmig ausgebildet und einstückig an dem oberen Randbereich 10 der Leuchteinheit 3 verbunden. Das zweite Laschenelement 43 weist eine Bohrung 48 auf, die in der Betriebsstellung der Leuchteinheit 3 fluchtend zu der zweiten Bohrung 47 des ersten Laschenelementes 42 angeordnet ist. Die Leuchteinheit 3 kann mittels eines nicht dargestellten Befestigungsmittels, vorzugsweise einer Befestigungsschraube mit einem Kopf, der werkzeugfrei drehbar ist, an dem ersten Laschenelement 42 befestigt sein.

Nach der Erstmontage der Leuchteinheit 3 sind die beiden Laschenelemente 42 und 43 fest miteinander verbunden. Die Leuchteinheit 3 ist über an die erste Bohrung 44 des ersten Laschenelementes 42 angreifende Befestigungsmittel kraftschlüssig mit der Längsstrebe 12 des Trägerteils 1 verbunden.

Zum Verbringen der Leuchteinheit 3 aus der Betriebsstellung in eine vordere Reparaturstellung kann die Leuchteinheit 3 zusammen mit dem zweiten Laschenelement 43 nach Lösen desselben von dem ersten Laschenelement 42 vorzugsweise durch werkzeugfreies Lösen des den Bohrungen 47, 48 zugeordneten Befestigungsmittels in Verstellrichtung 19 (X-Richtung) verschoben werden, bis die Reparaturstellung durch Anschlagen einer Kante der Leuchteinheit 3 erreicht ist. Im vorliegenden Ausführungsbeispiel ist die Leuchteinheit 3 ausschließlich über die beiden Laschen 41 mit dem Trägerteil 1 verbunden. Eine zusätzliche Befestigung der Leuchteinheit 3 an dem Haltesteg 5 des Haltearms 4 - wie nach dem ersten Ausführungsbeispiel - ist nicht vorgesehen. Das Verschieben der Leuchteinheit 3 von der Betriebsstellung in die Reparaturstellung erfolgt geführt mittels der bereits oben beschriebenen Führungsmittel 18 des Haltearms 4 bzw. der Leuchteinheit 3.

In der Reparaturstellung kann ein Leuchtmittelwechsel vorgenommen werden. Nachfolgend kann die Leuchteinheit 3 wieder in die Betriebsstellung zurückbewegt werden, wobei sich das zweite Laschenelement 43 auf den als Führungsfläche ausgebildeten zweiten Abschnitt 46 des Laschenelementes 42 legt. Das zweite Laschenelement 43 weist an seinem freien Ende zwei zueinander beabstandete Nasen 49 auf, die in der Betriebsstellung in Ausnehmungen 50 des ersten Abschnitts 45 des ersten Laschenelementes 42 eingreifen.

Nach Auflage des zweiten Laschenelementes 43 auf den zweiten Abschnitt 46 des ersten Laschenelementes 42 und Eingreifen der Nasen 49 in die Ausnehmung 50 des ersten Laschenelementes 42 ist das zweite Laschenelement 43 in zwei orthogonal zueinander stehenden Stellrichtungen, die senkrecht zu der Verstellrichtung 19 verlaufen, also in Y- und in Z-Richtung, vorpositioniert angeordnet. Die Nase 49 bzw. die Ausnehmung 50 dienen zur Positionierung des ersten Laschenelementes 42 und des zweiten Laschenelementes 43 relativ zueinander in Y-Richtung. Die Führungsfläche 46 und das zweite Laschenelement 43 dienen zur Positionierung des ersten Laschenelementes 42 und des zweiten Laschenelementes 43 relativ zueinander in Z-Richtung. Sie dienen als Kopplungsmittel zur Vorpositionierung des zweiten Laschenelements 43 an dem ersten Laschenelement 42.

Nachdem die Positionierung der beiden Laschenelemente 42, 43 vorgenommen worden ist, kann mittels des Befestigungsmittels eine kraftschlüssige Verbindung zwischen dem ersten Laschenelement 42 und dem zweiten Laschenelement 43 erfolgen, wobei sich das Befestigungsmittel in Gewindeeingriff mit dem ersten Laschenelement 42 befindet.

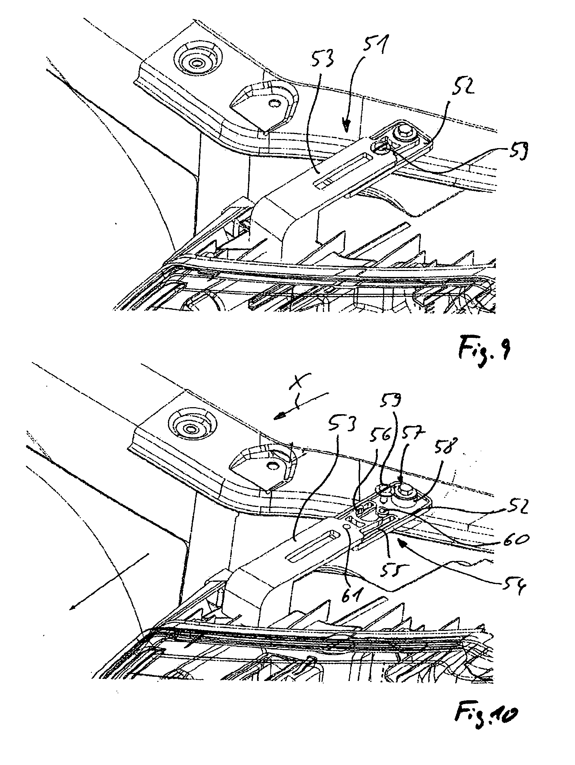

Nach einer weiteren Ausführungsform einer Halteeinrichtung kann eine Lasche 51 gemäß den Figuren 9 und 10 ausgebildet sein, die ein erstes Laschenelement 52 und ein zweites Laschenelemente 53 aufweist. Diese sind über unterschiedliche Kopplungsmittel miteinander vorpositionierbar. Im Unterschied zu dem vorhergehenden Ausführungsbeispiel weist das erste Laschenelement 52 einen in X-Richtung vorne liegenden zweiten Abschnitt 54 mit Führungsschlitzen 55 auf, so dass das zweite Laschenelement 53 geführt von der Reparaturstellung in die Betriebsstellung bringbar ist. Das zweite Laschenelement 53 weist ein klammerförmiges Ende 56 auf, das sich in der Betriebsstellung um einen eine erste Bohrung 57 des ersten Laschenelementes 52 umfassenden Halses 58 legt, so dass das zweite Laschenelement 53 in der Betriebsstellung relativ zu dem ersten Laschenelement 52 eine definierten Position in X-Richtung einnehmen kann. In dieser Position kann dann die Festlegung des zweiten Laschenelementes 53 an dem ersten Laschenelement 52 durch Betätigen eines Befestigungsmittels 59 (Befestigungsschraube) erfolgen, die in eine zweite Bohrung 60 des ersten Laschenelementes 52 und in eine Bohrung 61 des zweiten Laschenelementes 53 eingreift.

Nach einer nicht dargestellten alternativen Ausführungsform können die Führungsschlitze 55 auch offen ausgebildet sein. Wesentlich ist, dass das zweite Laschenelement 53 aus der Reparaturstellung in die Betriebsstellung spielfrei in Y-Richtung geführt wird.

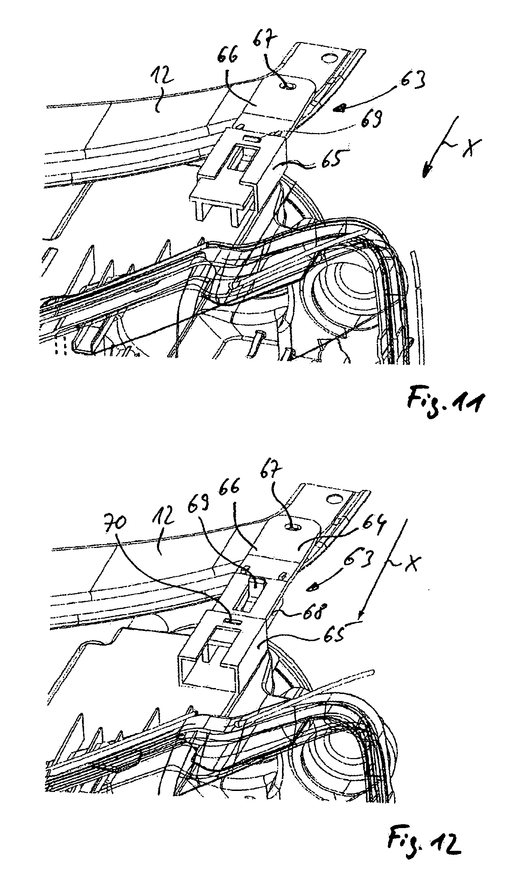

Nach einer weiteren Ausführungsform einer Halteeinrichtung gemäß den Figuren 11 und 12 ist eine Lasche 63 mit einem ersten Laschenelement 64 und einem zweiten Laschenelement 65 vorgesehen. Das erste Laschenelement 64 weist einen ersten Abschnitt 66 mit einer Bohrung 67 auf, mittels derer die Lasche 63 an der Längsstrebe 12 befestigbar ist. Ein zweiter Abschnitt 68 des ersten Laschenelementes 64 und das zweite Laschenelement 65 sind C-förmig bzw. doppel-T-förmig ausgebildet, so dass sie formschlüssig ineinandergreifen können. Die Festlegung in X-Richtung erfolgt durch eine Rastverbindung, wobei das erste Laschenelement 64 eine nachgiebige Rastnase 69 aufweist, die in eine schlitzförmige Ausnehmung 70 in der Betriebsstellung der Leuchteinheit 3 eingreift.

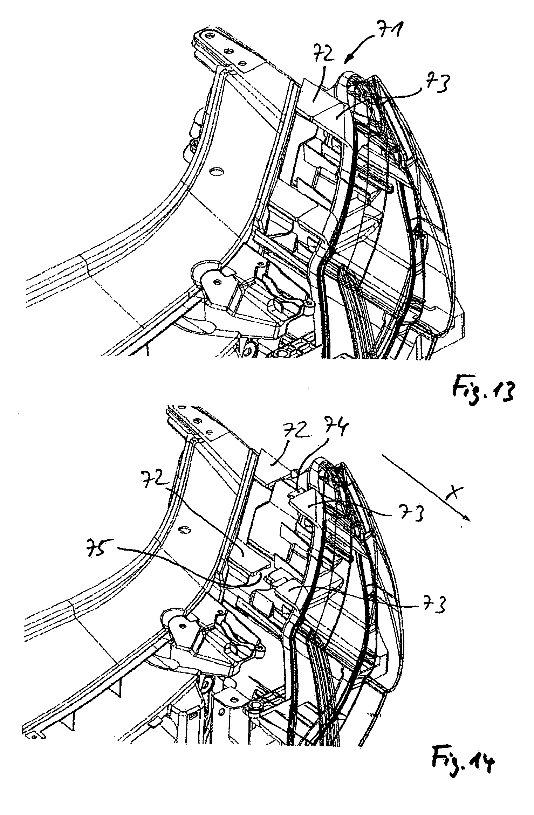

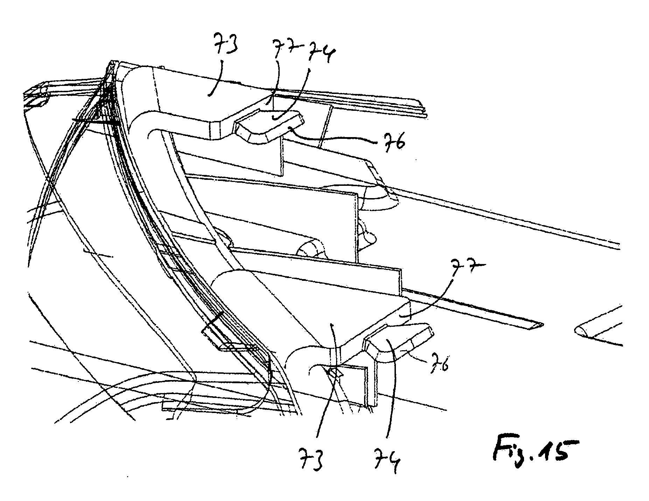

Nach einer weiteren Ausführungsform einer Halteeinrichtung gemäß den Figuren 13 bis 15 ist eine Lasche 71 mit einem ersten Laschenelement 72 und einem zweiten Laschenelement 73 vorgesehen, wobei das zweite Laschenelement 73 eine stirnseitig abragende Zunge 74 aufweist, die in der Betriebsstellung der Leuchteinheit 3 in an einer Unterseite des ersten Laschenelementes 72 angeordneten Nut 75 formschlüssig eingreift. Die Zunge 74 weist randseitig Einführschrägen 76 auf, die das Ansetzen des zweiten Laschenelementes 73 an dem ersten Laschenelement 72 erleichtern. Vorzugsweise weist auch die Nut 75 des ersten Laschenelementes 72 randseitig eine Einführschräge auf. Die Verbindung des ersten Laschenelementes 72 mit dem zweiten Laschenelement 73 erfolgt formschlüssig und frei von Befestigungsschrauben. Die sich zur Stirnseite 77 des zweiten Laschenelementes 73 verjüngenden Zungen 74 ermöglichen eine Schnappverbindung zwischen dem ersten Laschenelement 72 und dem zweiten Laschenelement 73.

Die Verstellrichtung 19 kann auch in einem spitzen Winkel zu einer horizontalen Achse und/oder vertikalen Achse verlaufen. Beispielsweise kann somit die Leuchteinheit 3 schräg nach außen oder nach innen aus der Betriebsstellung in die Reparaturstellung bewegt werden.

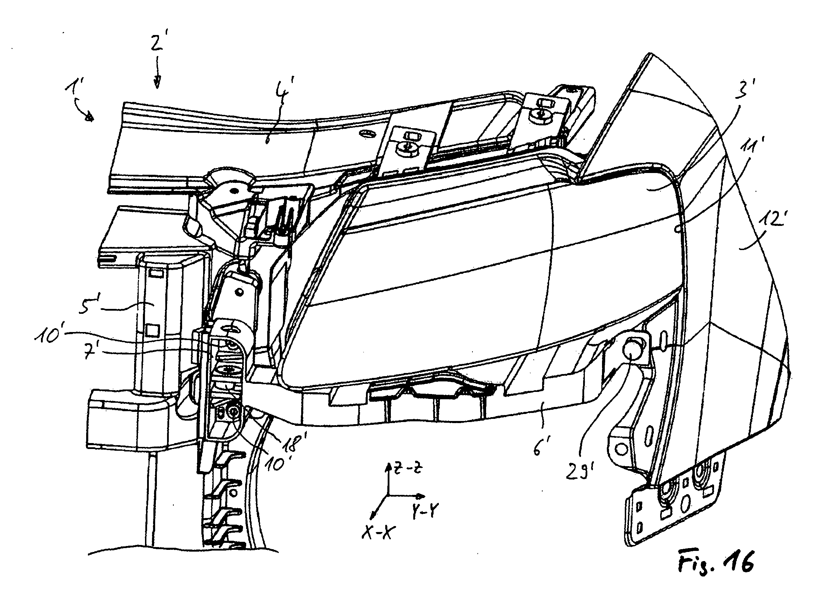

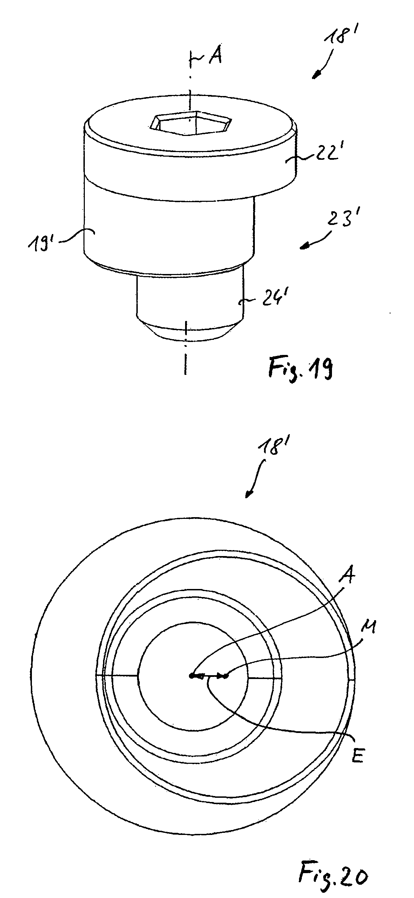

In den Figuren 16 bis 20 ist ein Frontendmodul 1' gemäß einer Ausführungsform der Erfindung dargestellt, welches einen Montageträger 2' zur Aufnahme von Bauteilen einer Motorkühlungsgruppe und/oder Bauteile einer Klimaanlage und/oder Bauteile eines Stoßfängerquerträgers und/oder eines Scheinwerfers 3' aufweist. Der Montageträger 2' weist eine obere Querstrebe 4' und eine nicht dargestellte untere Querstrebe sowie eine erste Vertikalstrebe 5' sowie eine beabstandet zu der ersten Vertikalstrebe 5' angeordnete nicht dargestellte zweite Vertikalstrebe auf. Die gegenüberliegenden Querstreben 4' sind durch die Vertikalstreben 5' miteinander verbunden.

Wie aus Figur 16 zu ersehen ist, ist ein Scheinwerfer 3' in einem Seitenbereich des Montageträgers 2' gehaltert, wobei die Halteeinrichtung zum einen einen den Scheinwerfer 3' tragenden Haltearm 6' und zum anderen einen Haltesteg 7' aufweist. Der Haltesteg 7' schließt sich an einem der Vertikalstrebe 5' zugewandten ersten Ende 8' des Haltearms 6' unmittelbar an und weist eine vertikal verlaufende Halteplatte 9' auf, die über Befestigungsmittel 10' (Schrauben) mit der Vertikalstrebe 5' des Montageträgers 2' verbunden ist.

Der Montageträger 2' ist bezüglich einer vertikalen Längsmittelebene des Frontendmoduls 1' symmetrisch ausgebildet. Die Scheinwerfer 3' erstrecken sich an gegenüberliegenden Endbereichen des Montageträgers 2' und grenzen in einer Endmontageposition des Haltearms 6' mit ihren äußeren Randkanten 11' unter Bildung einer Nullfuge an einem Seitenteil 12' (Kotflügel) der Fahrzeugkarosserie an.

Der Haltesteg 7' weist einen elastischen Abschnitt 13' auf. Der elastische Abschnitt 13' kann in einer parallel zu ersten Vertikalstrebe 5' verlaufenden Richtung gestaucht werden, so dass der einstückig mit demselben verbundene Haltearm 6' in einer senkrecht hierzu verlaufenden Verstellrichtung V hin- oder herbewegt werden kann. Der elastische Abschnitt 13' weist zwei elastische Schenkel 14', 14" auf, die sich von dem ersten Ende 8 des Haltearmes 6' jeweils bogenförmig in Richtung einer die Enden der Schenkel 14', 14" verbindenden Verbindungsplatte 15' erstrecken. Die Verbindungsplatte 15' ist - wie die Halteplatte 9' - parallel zur Vertikalstrebe 5' angeordnet. Damit der elastische Abschnitt 13' in Z-Richtung nachgiebig ausgebildet ist, weisen die kelchförmig verlaufenden Schenkel 14', 14" Materialverdünnungen und/oder Ausnehmungen 16' oder einen Schlitz 17' auf.

In einem Bereich zwischen den Schenkeln 14', 14" des elastischen Abschnitts 13' ist ein Einstellelement 18' zur Verstellung des Scheinwerfers in Y-Richtung (Verstellrichtung V) angeordnet. Das Einstellelement 18' ist als ein Exzenterelement ausgebildet, das eine kreisförmige Mitnahmefläche 19' aufweist, dessen Mittelpunkt M in einem Abstand E zu einer Drehachse A des Exzenterelementes 18' angeordnet ist. Alternativ kann die Mitnahmefläche 19' auch bogenförmig ausgebildet sein, so dass durch Verdrehen des Einstellelementes 18' ein exzentrischer Nocken verdreht wird. Der Abstand E ist der maximale Verstellweg, um den der Haltearm 6' in Y-Richtung verstellt werden kann.

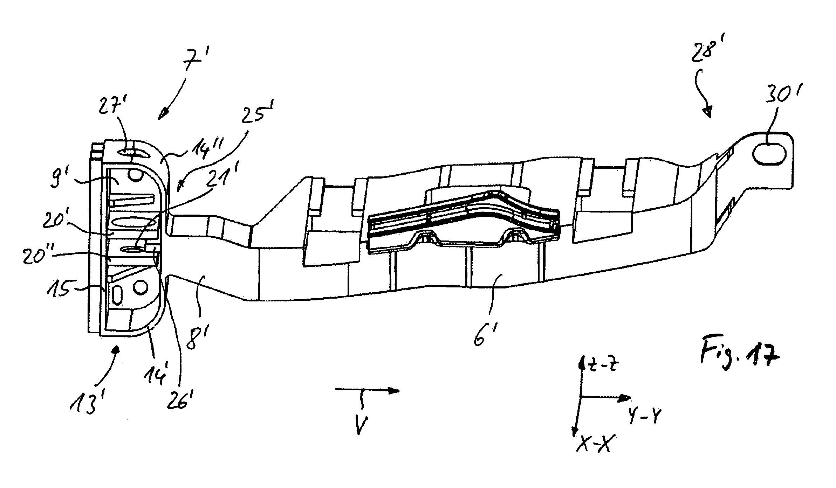

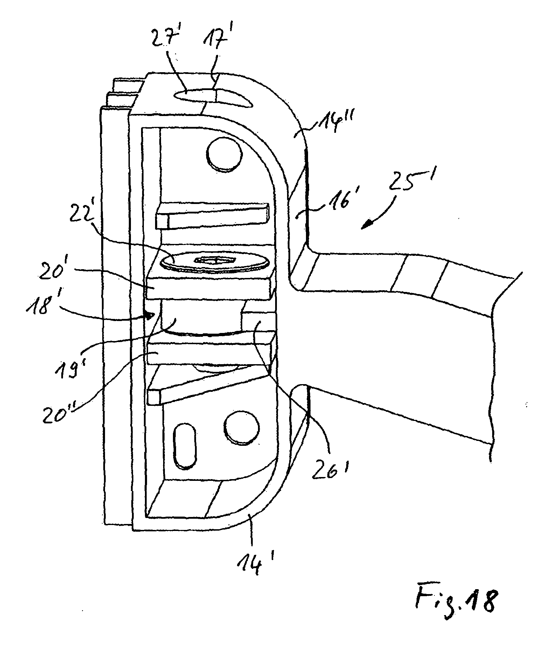

Wie insbesondere aus den Figuren 17 und 18 ersichtlich ist, ragen von der Halteplatte 9' und/oder von der Verbindungsplatte 15' Tragelemente 20' ab, die Öffnungen 21' aufweisen zur Aufnahme des Exzenterelementes 18'. Ein oberes Tragelement 20' ist derart ausgebildet, dass das Exzenterelement 18' von oben in dasselbe eingesetzt werden kann, wobei ein Exzenterkopf 22' auf einer Oberseite des Tragelementes 20' zur Anlage kommt. Das untere Tragelement 20" weist eine solche Öffnung auf, dass ein sich an den Exzenterkopf 22' anschließender Exzenterschaft 23' mit einem endseitigen Verjüngungsabschnitt 24' in die Öffnung 21' des unteren Tragelementes 20" eingreift. Zwischen dem oberen Tragelement 20' und dem unteren Tragelement 20" erstreckt sich in der eingesetzten Position des Exzenterelementes 18' ein oberer Abschnitt des Exzenterschaftes 23', der die Mitnahmefläche 19' aufweist.

Von einem Scheitelbereich 25 des elastischen Abschnitts 13' ragt in einem Zwischenraum zwischen den Schenkeln 14', 14" ein Anschlagelement 26' ab, das mit der Mitnahmefläche 19' des Exzenterelementes 18' zusammenwirkt. Das Anschlagelement 26' erstreckt sich in einem Bereich zwischen dem oberen Tragelement 20' und dem unteren Tragelement 20".

Der Exzenterkopf 22' weist eine versenkte Innensechskantform auf, so dass das Exzenterelement 18' mittels eines Innensechskantschlüssels (Inbusschlüssel) betätigbar ist. Zu diesem Zweck weist der obere Schenkel 14' eine Durchgangsbohrung 27' auf, so dass ein Monteur das Werkzeug von oben an den Exzenterkopf 22' ansetzen kann.

Nach einer nicht dargestellten alternativen Ausführungsform der Erfindung kann das Exzenterelement 18' auch um 90° versetzt angeordnet sein, so dass sich die Drehachse A in X-Richtung erstreckt. Hierdurch könnte das Exenterelement 18' auch mittels eines Einstellwerkzeugs von vorne betätigt werden.

Nach einer weiteren alternativen Ausführungsform kann das Exzenterelement 18' zwischen den Schenkel 14', 14" auch derart angeordnet sein, dass die Drehachse A bzw. die Mittelachse M des Exzenterelementes 18' in einem Winkel zu der Z-Richtung und der X-Richtung angeordnet ist. Hierdurch ist ein an die Bauraumverhältnisse des Kraftfahrzeugs angepasstes Ansetzen des Einstellwerkzeuges an das Exzen-terelement 18' gewährleistet. Die Mitnahmefläche des Exzenterelementes 18' wäre dann jeweils so geformt, dass durch Drehung des Exzenterelementes 18' um seine Mittelachse M eine Verstellkraft in Verstellrichtung V auf das Anschlagelement 26' wirkt.

In Abhängigkeit von der Drehstellung des Exzenterelementes 18' wird eine Verstellkraft auf das Anschlagelement 26' ausgeübt, die das Anschlagelement 26' in Verstellrichtung V verstellt. Gleichzeitig erfolgt eine Dehnung oder Stauchung der Schenkel 14', 14", so dass der Haltearm 6' in eine gewünschte Verstellposition in Verstellrichtung V verbracht werden kann.

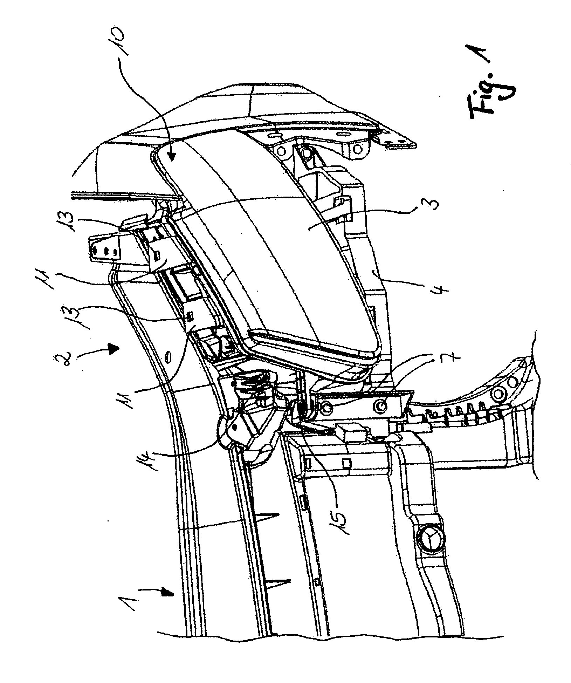

Vorzugsweise befindet sich die exzentrische Mitnahmefläche 19' (Nocken) in der Ausgangsstellung auf einer dem Haltearm 6' abgewandten Seite. Zum Verbringen des Scheinwerfers 3' in die vorgesehene Verstellposition gemäß Figur 1 unter Bildung einer Nullfuge zu dem Seitenteil 12' wird das Exzenterelement 18' soweit verdreht, dass die exzentrische Mitnahmefläche 19' (Nocken) nach und nach unter Erhöhung einer Verstellkraft auf das Anschlagelement 26' drückt. Hierdurch wird der Haltearm 6' zusammen mit dem Scheinwerfer 3' in Y-Richtung weg von der Vertikalstrebe 5' bewegt, bis die Randkante 11' an dem Seitenteil 12' zur Anlage kommt. Nun ist der Scheinwerfer 3' in Y-Richtung ausgerichtet, so dass der Haltearm 6' an einem der Vertikalstrebe 5' abgewandten zweiten Ende 28' über Befestigungsmittel 29' an dem Seitenteil 12' fixiert werden kann. Das Sollmaß in Y-Richtung ist somit erreicht.

Das Sollmaß in X-Richtung kann durch die Elastizität des Haltesteges 7' erreicht werden.

Das Sollmaß in Z-Richtung kann durch das als Bolzen ausgebildete Befestigungsmittel 29' im Bereich des zweiten Endes 28' des Haltearms 6' eingestellt werden. Der Bolzen 29' erstreckt sich nicht nur durch ein Langloch 30' des zweiten Endes 28' des Haltearms 6', sondern auch in einer weiteren nicht dargestellten Bohrung der Fahrzeugkarosserie, wobei die Relativlage des Bolzens 29' zu der Bohrung der Fahrzeugkarosserie in Z-Richtung einstellbar ist.

Das Ausrichtverfahren für den Scheinwerfer 3' wird im Folgenden näher erläutert:
Der Scheinwerfer 3' ist über nicht dargestellte Haltemittel an dem Haltearm 6' gehaltert. Der Haltearm 6' ist mittels des Haltestegs 7' an der Vertikalstrebe 3' des Montageträgers 2' fixiert.

Nach Ansetzen des Montageträgers 2' an die Vorderseite der Fahrzeugkarosserie wird das auf einer dem Haltesteg 7' abgewandten Seite angeordnete zweite Ende 28' des Haltearms 6' mittels des Bolzens 29' an dem Seitenteil 12' vorfixiert. Zu diesem Zweck weist das Langloch 29' des zweiten Endes 28' eine solche in Verstellrichtung V weisende Hauptachse auf, dass die Halteplatte 9' entsprechend des Abstandes E in Verstellrichtung V verschoben werden kann. Die Hauptachse des Langlochs 30' erstreckt sich in Y-Richtung.

Durch Betätigen des Einstellelementes 18' kann nun der Scheinwerfer 3' in Y-Richtung ausgerichtet werden, bis er die vorgesehene Verstellposition unter Bildung des vorgegebenen Fugenverlaufes an dem Seitenteil 12' eingenommen hat. Nachfolgend erfolgt die endgültige Fixierung des Haltearms 6' durch Festziehen des Bolzens 29', so dass eine weitere Verschiebung des Scheinwerfers 3' in Y-Richtung nicht mehr möglich ist.

## Patentansprüche

1. Frontendmodul für Fahrzeuge mit einem Montageträger (2), der mehrere Streben (4', 5') aufweist zur Aufnahme mehrerer Bauteile, mit einem Scheinwerfer als Bauteil, der von einem Haltearm (6') einer an einer Strebe befestigten Halteeinrichtung getragen ist und an dem sich auf einer der Fahrzeugslängsachse abgewandten Seite ein Seitenteil des Fahrzeugs anschließt, dass zur Ausrichtung des Scheinwerfers (3') in der Endmontageposition ein an der Halteeinrichtung angeordnetes Einstellelement (18') mit dem Haltearm (6') in Verbindung steht, so dass der mit dem Scheinwerfer (3') verbundene Haltearm (6') in einer vorgegebenen Verstellrichtung (V) verstellbar angeordnet ist, **dadurch gekennzeichnet, dass** das Einstellelement (18') als ein Exzenterelement (18') ausgebildet ist, wobei eine kreisförmige Mitnahmefläche (19') des Exzenterelements (18') einen Mittelpunkt (M) aufweist, der sich in einem Abstand (E) zu der Drehachse (A) des Exzenterelementes (18') befindet, so dass mittels Verdrehen des Einstellelementes (18') um die Drehachse (A) auf ein Anschlagelement (26') des Haltearms (6') eingewirkt wird zum Verschieben des Haltearms (6') in die Verstellrichtung (V), und dass sich an dem der vertikalen Strebe (5') zugewandten Ende (8') des Haltearms (6') ein Haltesteg (7') anschließt, der eine Halteplatte (9') aufweist zur Befestigung des Haltearms (6') an der vertikalen Strebe (5') des Montageträgers (2') und der einen zumindest in Verstellrichtung (V) nachgiebig ausgebildeten elastischen Abschnitt (13') aufweist.

2. Frontendmodul nach Anspruch 1, **dadurch gekennzeichnet, dass** das Einstellelement (18') drehbar um eine senkrecht zur Verstellrichtung (V) angeordnete Drehachse (A) im Bereich eines der vertikalen Strebe (5') des Montageträgers (2') zugewandten Endes (8') des Haltearms (6') gelagert ist.

3. Frontendmodul nach Anspruch 1 oder 2, **dadurch gekennzeichnet, dass** der elastische Abschnitt (13') des Haltestegs (7') mindestens zwei elastische Schenkel (14', 14") aufweist, die jeweils in unterschiedlichen Richtungen von dem ersten Ende (8') des Haltearms (6') abragen.

4. Frontdendmodul nach Anspruch 3, **dadurch gekennzeichnet, dass** das Einstellelement (18') in einem Bereich zwischen den Schenkeln (14', 14") des elastischen Abschnitts (13') angeordnet ist.

5. Frontendmodul nach Anspruch 3 oder 4, **dadurch gekennzeichnet, dass** sich zwei elastische Schenkel (14', 14") bogenförmig von dem ersten Ende (8') des Haltearms (6') zu einer die Enden der Schenkel (14', 14") verbindenden Verbindungsplatte (15') und/oder der Halteplatte (9') erstrecken und dass mindestens ein Schenkel (14', 14") bereichsweise mit einer Materialverdünnung und/oder einem Schlitz (17') und/oder einer Ausnehmung (16') versehen ist zur Erhöhung der Elastizität des Schenkels (14', 14") senkrecht zur Verstellrichtung (V).

6. Frontendmodul nach einem der Ansprüche 3 bis 5, **dadurch gekennzeichnet, dass** das Anschlagelement (26') des Haltearms (6') von einem Scheitelbereich (25') der Schenkel (14', 14") derart abragt, dass der Haltearm (6') bei Betätigung des Einstellelementes (18') in Richtung des Haltearms (6') und/oder in horizontaler Richtung quer zur Fahrtrichtung verstellt wird:

7. Frontendmodul nach einem der Ansprüche 1 bis 6, **dadurch gekennzeichnet, dass** das Exzenterelement (18') einen Exzenterkopf (22') solcher Form aufweist, dass das Exzenterelement (18') mittels eines Drehwerkzeugs verdrehbar ist.

8. Frontendmodul nach einem der Ansprüche 1 bis 7, **dadurch gekennzeichnet, dass** ein auf einer dem Haltesteg (7') abgewandten Seite angeordnetes zweites Endes (28') des Haltearms (6') ein in Richtung der Verstellrichtung (V) gestrecktes Langloch (30') aufweist zur Befestigung des Haltearms (6') an dem Seitenteil (12').

9. Frontendmodul nach einem der Ansprüche 1 bis 8, **dadurch gekennzeichnet, dass** die Drehachse (A) des Einstellelementes (18') in vertikaler Richtung oder in horizontaler Richtung oder in einem spitzen Winkel zur vertikalen Richtung verläuft.

10. Frontendmodul nach einem der Ansprüche 1 bis 9, **dadurch gekennzeichnet, dass** mindestens ein Schenkel (14') des elastischen Elementes (13') eine Durchgangsöffnung (27') aufweist zum Durchtritt eines Drehwerkzeuges.

## Claims

1. Front end module for vehicle which comprises a mounting support (2) having several braces (4' 5') to receive several components of which one is a headlight that is carried by a holding arm (6') of a holding device attached to one of said braces and that extends from a side panel of the vehicle on a side facing way from the vehicle longitudinal axis wherein to adjust the headlight (3') in the final mounting position an adjusting element (18') arranged on the holding device is connected to said holding arm (6') such that said holding arm (6') fixed to the headlight (3') is adjustably arranged in a predetermined adjusting device (V), **characterized in that** the adjusting element (18') is an eccentric element having a circular tang face (19') whose mid-point (M) is disposed a distance (E) away from the swivel axis (A) of said eccentric element such that by turning the adjusting element (18') about said swivel axis (A) a force is applied to a stop element (26') of the holding arm (6') to shift said arm (6') in an adjusting direction (V), and that a holding web member (7') extends from the very end (8') of the holding arm (6') that is facing the vertical brace (5') and is provided with a holding plate (9') which is to attach the holding arm (6') to the vertical brace (5') of the mounting support (2') and which has an elastic section (13') that is flexible in the adjusting direction (V) at least.

2. Front end module according to Claim 1, **characterized in that** the adjusting element (18') is rotatable around a swivel axis (A) disposed perpendicular to the adjusting direction (V) in the area of an end (8') of the holding arm (6') that is facing the vertical brace (5') of the mounting support) 2').

3. Front end module according to Claim 1 or 2, **characterized in that** the elastic section (13') of the holding web member (7') has at least two flexible legs (14', 14") protruding from the first end (8') of the holding arm (6') in different directions.

4. Front end module according to Claim 3, **characterized in that** the adjusting element (18') is disposed in an area between the legs (14', 14") of the elastic section (13').

5. Front end module according to Claim 3 or 4, **characterized in that** the two flexible legs (14', 14") extend on a curved path from the first end (8') of the holding arm (6') to a connector plate plate (15') joining the ends of said legs (14', 14") and/or to the holding plate (9') and that at least one of said legs (14', 14") has a portion of smaller thickness and/or a slot (17') and/or a recess (16') to increase the flexibility of the legs (14', 14") perpendicular to the adjusting direction (V).

6. Front end module according to any of the preceding Claims 3 to 5, **characterized in that** the stop element (26') of the legs (14', 14") protrudes from a peak area (25') of said legs (14', 14") in such a way that the holding arm (6') is shifted when the adjusting element (18') is moved toward said arm (6') and/or in a horizontal direction cross to the travel direction.

7. Front end module according to any of the preceding Claims 1 to 6, **characterized in that** the eccentric element (18') has an eccentric head (22') of such a shape that said element (18') can be turned by means of a turning tool.

8. Front end module according to any of the preceding Claims 1 to 7, **characterized in that** a second end (28') of the holding arm (6') that is facing away from the holding web member (7') has slot (30') extending in the adjusting direction (V) to fix said holding arm (6) to the side panel (12').

9. Front end module according to any of the preceding Claims 1 to 8, **characterized in that** the swivel axis (A) of the adjusting element (18') extends in vertical direction or in horizontal direction or under an acute angle relative to the vertical direction.

10. Front end module according to any of the preceding Claims 1 to 9, **characterized in that** at least one leg (14') of the elastic element (13') has an opening (27') for a turning tool to be put through.

## Revendications

1. Bloc avant pour véhicules automobiles, avec un support de montage (2), qui présente plusieurs entretoises (4, 5) destinées à recevoir plusieurs composants, avec un phare, qui, en tant que composant, est porté par un bras de fixation (6') d'un dispositif de fixation, fixé sur une entretoise, et auquel se raccorde une partie latérale du véhicule automobile, sur un côté opposé à l'axe longitudinal du véhicule automobile, sachant que, pour l'orientation du phare (3') dans la position finale de montage, un élément de réglage (18'), agencé sur le dispositif de fixation, est en relation avec le bras de fixation (6'), de sorte que ledit bras de fixation (6'), relié au phare (3'), puisse être ajusté dans une position de réglage (V) prédéterminée, **caractérisé en ce que** l'élément de réglage (18') est réalisé sous la forme d'un élément d'excentrique, sachant qu'une surface d'entraînement circulaire (19') de l'élément d'excentrique 18') présente un point central )M), qui est situé à un intervalle (E) de l'axe de rotation (A) de l'élément d'excentrique (18') de sorte que, par pivotement de l'élément de réglage (18') sur l'axe de rotation (A), un élément de butée (26') du bras de fixation (6') est sollicité pour pousser le ledit bras de fixation (6') dans la direction de déplacement (V), et que, à l'extrémité (8') du bras de fixation (6'), orientée vers l'entretoise verticale (5'), se raccorde une patte de fixation (7'), qui présente une plaque de fixation (9'), destinée à la fixation du bras de fixation (6') sur l'entretoise verticale (5') du support de montage (2') et qui est présente une section élastique (13'), qui est de conception flexible au moins dans la direction de déplacement (V).

2. Bloc avant selon la revendication 1, **caractérisé en ce que** l'élément de réglage (18') est monté en pivotement autour d'un axe de rotation (A), disposé perpendiculairement par rapport à la direction de déplacement (V), sur une extrémité (8') du bras de fixation (6'), orientée vers la région d'une entretoise verticale (5') du support de montage (2).

3. Bloc avant selon revendication 1 ou 2, **caractérisé en ce que** la section élastique (13') de la patte de fixation (7') présente au moins deux branches élastiques (14', 14"), qui font respectivement saillie dans des directions différentes, au-delà de la première extrémité (8') du bras de fixation (6').

4. Bloc avant selon la revendication 3, **caractérisé en ce que** l'élément de réglage (18') est disposé dans une région, entre les branches (14', 14") de la section élastique (13').

5. Bloc avant selon revendication 3 ou 4, **caractérisé en ce que** deux branches élastiques (14', 14") s'étendent, en forme d'arc, de la première extrémité (8') du bras de fixation (6') jusqu'à plaque de liaison (15'), qui relie les extrémités des branches (14', 14"), et / ou la plaque de fixation (9'), et que l'une des branches (14, 14"), au moins, est pourvue, par sections, d'un amincissement de matériau et / ou d'une fente (17') et / ou d'un évidement (16'), pour augmenter l'élasticité des branches (14', 14") perpendiculairement à la direction de déplacement (V).

6. Bloc avant selon l'une des revendications 3 à 5, **caractérisé en ce que** l'élément de butée (26') du bras de fixation (6') est en saillie d'une zone de sommet (25') de la branche (14', 14") de sorte que ledit bras de fixation (6') soit déplacé dans la direction du bras de fixation (6') et / ou dans la direction horizontale, transversalement par rapport à la direction de marche.

7. Bloc avant selon l'une des revendications 1 à 6, **caractérisé en ce que** l'élément d'excentrique (18') présente une tête d'excentrique (22') d'une forme telle que l'élément d'excentrique (18') puisse être tourné au moyen d'un outil rotatif.

8. Bloc avant selon l'une des revendications 1 à 7, **caractérisé en ce qu'**une deuxième extrémité (28') du bras de fixation (6'), disposée sur une face opposée à la patte de fixation (7'), présente un trou oblong (30'), qui, s'étendant dans la direction de déplacement (V), est destiné à la fixation du bras de fixation (6') sur une pièce latérale (12').

9. Bloc avant selon l'une des revendications 1 à 8, **caractérisé en ce que** l'axe de rotation (A) de l'élément de réglage (18') s'étend en direction verticale ou en direction horizontale ou en angle aigu par rapport à la direction verticale.

10. Bloc avant selon l'une des revendications 1 à 9, **caractérisé en ce qu'**au moins une branche (14') de l'élément élastique (13') présente une ouverture de passage (27) pour le passage d'un outil rotatif.
